# EUROPEAN PATENT SPECIFICATION

(11) **EP 1 032 274 B1**
(45) Date of publication and mention of the grant of the patent: **11.12.2002**
(21) Application number: 98937541.5
(22) Date of filing: 24.06.1998
(51) Int. Cl.: A21D 10/02, A21D 6/00, A21D 13/08, A21C 11/02, A21C 9/06

(54) **READY-FOR-USE COOKIE DOUGH**
GEBRAUCHSFERTIGER KEKSTEIG
PATE A BISCUIT PRETE A L'EMPLOI

(43) Date of publication of application: 06.09.2000
(73) Proprietor: Société des Produits Nestlé S.A., 1800 Vevey (CH)
(72) Inventor: BLASCHKE, Dieter, CH-1814 La Tour-de-Peilz (CH); NAIRN, Peter, CH-1806 St-Légier (CH)
(74) Representative: Thomas, Alain
(86) International application number: EP9803848
(87) International publication number: WO99066802

(56) References cited:
- EP-A- 0 084 210
- EP-A- 0 145 550
- DE-U- 9 417 488
- GB-A- 461 263
- US-A- 3 024 112

## Description

The invention concerns a ready-for-use cookie dough in the form of a block which can be preserved in the refrigerator and which is prepared from flour, sugar, baking powder and fat, containing up to 1.5 % baking powder and being provided in a precut form or in a form having grooves.

Ready-for-use cookie dough in the form of a block being provided in a precut form or in a form having grooves is already known from our international patent application PCT/EP97/07190. This solution allows to have a very convenient product, wherein the consumer has the possibility to break the block of dough into pieces which can be directly placed in the oven, without any part of dough having to be recycled.

The aim of the present invention is to have a ready-for-use cookie dough, wherein the block of dough gives the possibility to the consumer to have pieces either with different colours, or with specific figures on said pieces, or with decoration on said pieces.

The invention relates to a ready-for-use cookie dough in the form of a block , wherein said block presents the following features selected from the group consisting of :
a) said block has at least two different layers,
b) said block has at least two different stripes for each piece taken from the block,
c) said block has for each piece a stamping on the top,
d) said block has for each piece a decoration on the top,
e) said block has for each piece a filling different from the basic dough and
f) said block has precut forms of different specific shapes.

In the present description, the contents are given by weight. Baking powder is understood to mean a mixture of at least one bicarbonate or carbonate salt, at least one acidifying agent and at least one separating agent. None of the constituents of this mixture is critical. Sodium carbonate is preferably used with sodium diphosphate or disodium dihydrogen pyrophosphate with a starch as separating agent. These mixtures are directly available commercially with a fixed composition. For example, the bicarbonate is present in an amount of 30 %, the acid in an amount of 40 % and the separating agent in an amount of 30 %. In a specific example, it is also possible to use only sodium bicarbonate, in an amount of from 0.2 to 0.7 %, preferably 0.5 %.

According to the first embodiment of the invention, the block has at least two different layers. The number of layers is not critical, but on a possible point of view, this number of layers is comprised between 2 and 6. More specifically, this number of layers is 2. These layers are more specifically of different composition. This can be done for example by adding to the basic dough different types of colours, accepted in the food area. For example, it is possible to have the basic dough as first layer and said dough added with cocoa as the second layer, wherein the obtained cookie has a clear face and a dark face. The way for producing said layered dough can be either by extrusion or sheeting or another way known in the technique.

According to the second embodiment of the invention, the block has at least two different stripes for each piece taken from the block. This number of stripes is not critical, but on a possible point of view, this number of stripes is comprised between 2 and 6. More specifically, this number of stripes is 4. These stripes are more specifically of different composition. This can be done for example by adding to the basic dough different types of colours, accepted in the food area. For example, it is possible to have the basic dough as first stripe and said dough added with cocoa as the second stripe, wherein the obtained cookie has a clear face and a dark face. The way for producing said layered dough can be as for the layers either by extrusion or sheeting or another way known in the technique.

According to the third embodiment of the invention, each piece of the dough block is stamped on the top with a recognisable design or image, for example an animal or a geometric shape. In this case, a known stamping device is used for creating an indentation on the top of the pieces. The dough is a classical dough in its composition.

According to the fourth embodiment of the invention, each piece of the block receive on the top a decoration. This decoration can be either precisely placed or randomly put on the top of the pieces. The possible decorations are seeds, for example sesame seeds, or an icing, or sugar balls or other similar decorations. The way to put the decoration on the top of the pieces can be either a sprinkling device or manual, robotic or mechanical means, known per se.

According to a fifth embodiment of the invention, the block of dough has a filling for each piece different from the basic dough. This filling could be either a creamy or a liquid filling. This filling is either caramel, or chocolate, or creamy. The filling can be also a solid filling, like a chocolate dough or another aromatized dough. In the case of a liquid filling, it is so calculated that the filling remains inside the basic dough after cooking. The amount of the filling is not critical : this filling represents from 5 to 50 % of the piece of dough. The way of producing said block is either by coextrusion, by injection, or by putting a first layer, placing the filling on said first layer and finally putting the second layer of dough.

According to a last embodiment of the invention, the block has precut forms of different specific shapes. The aim is to have on the same block different shapes without any part of dough to be recycled. For example, it is possible to have geometrical shapes, like triangle, square, rectangle or animal shapes or any other shapes.

The flour used is a cereal flour with a high content or with a lower content of proteins. Any type of flour can be taken into consideration. The flour content is normally between 10 and 40% preferably between 25 and 34%.

The sugar used is not critical. Its content is between 10 and 40%. The sugars which can be used are fructose, sucrose, dextrose and maize syrup. Sucrose is preferred, for example in the form of granulated sugar. The dough should have a good resistance during preservation in the refrigerator, that is to say that it should be quite hard, but should nevertheless spread well during baking so as to develop in a circular form. It is with sucrose that this result is best achieved. It is also necessary to have a dough having a water content of the order of 6 to 9%. In order to increase the sugar content, it is also possible to add a sugar substitute such as sorbitol or any other substitute.

The fat used in the dough composition according to the invention is a solid or liquid fat at room temperature. It can be of animal or plant origin, for example lard, tallow, margarine, maize oil, copra oil, palm oil, sunflower oil, soya bean oil. It is also possible to use fat mixtures. These fats are emulsified or stabilized with mono- or diglycerides or other emulsifiers known in the art. For example, according to the invention, margarine which already contains the emulsifier is used. The fat content is between 10 and 25%. The type of fat used also has an influence on the flow capacity of the dough during baking.

As texturing agent, whole egg or egg white at a content of between 0 and 10% is used, preferably at a content of 2 to 5%.

The dough according to the invention also contains flavouring agents, such as vanilla flavour and cocoa powder.

This dough may finally also contain chocolate in the form of pieces, pieces of oat flakes or groundnut pieces. It is also possible to have pieces, whole hazel nuts or candy pieces. The size of these pieces is not critical and may vary between 1 and 10 mm. Dark, milk or white chocolate may be used. The content of chocolate is between 10 and 30%. The chocolate used is a commercial chocolate or a chocolate which can be used in pastry making or in catering.

It is very convenient according to the invention to have a block of dough already having the correct thickness in order to avoid having to further roll out the said dough. To this effect, a block is obtained which has a thickness of between 1 and 3 cm.

As regards the precut of dough block, it is envisaged so as to make it into parallelepipedal dice of between 3 and 4 cm in size and 1 to 3 cm thick. If a cylindrical block is available, circles having a diameter of between 3 and 6 cm and a thickness of between 1 and 3 cm are made. In the case of a prismatic block, a thickness of between 1 and 3 cm and an equilateral triangle with 3 to 6 cm sides are always envisaged.

For the block having grooves, these are not critical as regards their sizes. Grooves are normally provided which have a width of the order of 1 to 5 mm and an identical depth. In this case, the consumer should either break the dice like for a chocolate bar, or he uses a knife to finish the cutting along the said grooves.

As a practical embodiment, there may be mentioned with a dough thickness of 2 cm, the possibility of making 3.5 3.5 cm dice. For a block of 300 g, there would be 3 3 dice, for a block of 400 g, 3 4 dice and for a block of 500 g, 3 5 dice.

According to the last embodiment of the invention, the amount of baking powder must be reduced or totally suppressed , so that the shapes do not flow. The dough thickness can also be reduced, for example in the area of 2 to 6 mm. It is also possible in this case to have two or three sheets of dough in the same packaging, said sheets being separated with a paper foil.

When the dice are ready, they are arranged on an oven tray and the baking is carried out conventionally, that is to say at a temperature of 180 C for 12 to 18 minutes. After baking, a cookie having a diameter of 7 cm is obtained for dice of 3.3 on 3.5 cm.

Cookies which are quite round are obtained by virtue of the dough according to the invention using dice whose form is substantially square.

The block of dough is wrapped conventionally, for example in a wrapping based on synthetic material or based on covered carton, so as to be protected from air and moisture. The shelf life of the dough according to the invention in a refrigerator is normally of the order of several months.

The remainder of the description is made with reference to the drawings representing :
Figure 1 is perspective view of the cookie dough according to the first embodiment,
Figure 2 is a section through a plane cutting perpendicularly the dough of figure 1,
Figure 3 is a section according to the second embodiment of the invention and
Figure 4 is a section according to the fifth embodiment of the invention.

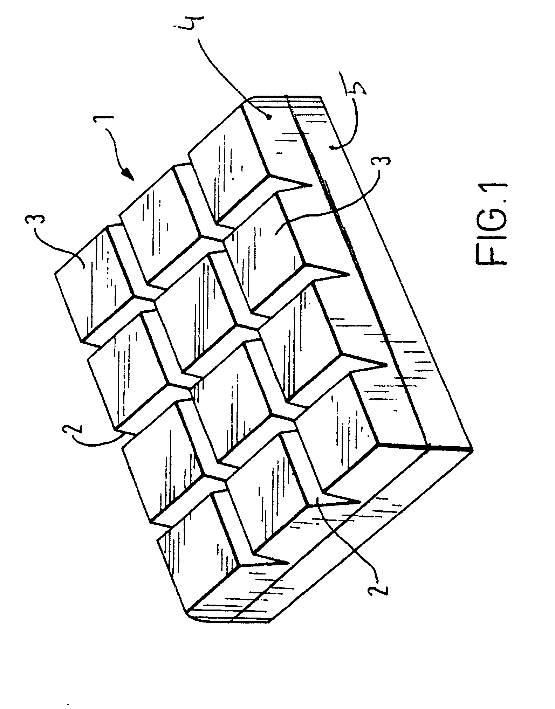

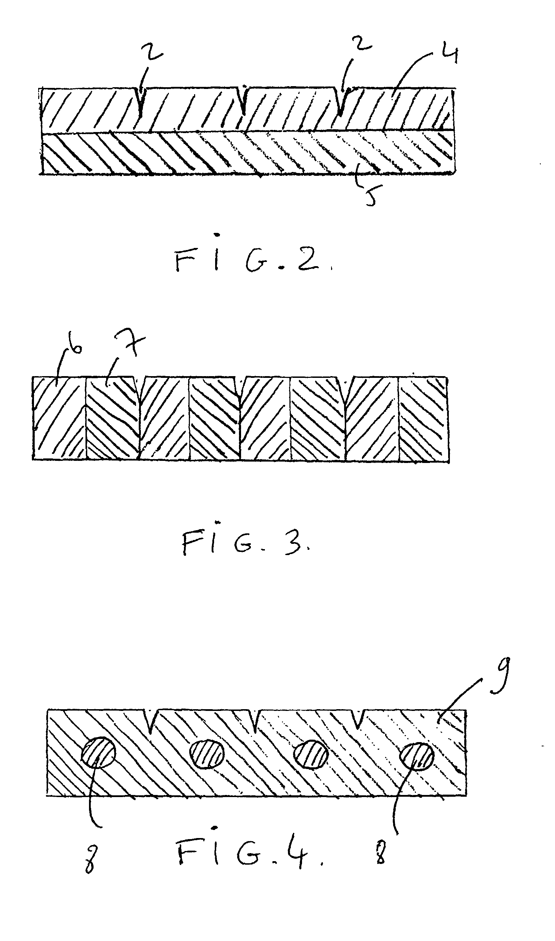

According to figure 1 and 2,the block (1) of cookie dough is prepared with the composition as stated in example 1. The preparation is made by sheeting and when the block is formed, marker rolls which make it possible to form the grooves (2) are made to pass over it. At the time of use, it is sufficient to break off one by one, the various dice (3) formed and to place them on a tray to put in the oven. The dice (3) are formed with two layers : the top layer (4) made with a classical dough and the lower layer (5) made with the same dough but with the addition of cocoa.

Figure 3 gives a section with two stripes (6) and (7). Every dice, which has been broken has these both stripes (6) and (7). For example, stripe (6) is the classical dough as before and stripe (7) is the same dough, but with cocoa.

Another embodiment of the invention is given with figure 4, showing a section through the middle of the dice. In this case, there is a filling (8) embedded in the dough (9). This filling is not critical, the only condition being that said filling must withstand the cooking. The filling can be a fruit jam, or chocolate, or hazel nut or a mixture of chocolate and hazel nut. The ratio dough/filling is not critical : this ratio is normally comprised between 40/60 and 60/40.

The remainder of the description is made with reference to the examples.

### Example 1

The various ingredients stated in the table below are mixed for making a ready-for-use cookie dough with two layers. The amounts are in weight %.

| Example | Clear dough | Dark dough |
|---|---|---|
| Sugar | 33.3 | 34.5 |
| Whole egg | 9.5 | 9.4 |
| Baking powder | 0.5 | 0.5 |
| Salt | 0.5 | 0.5 |
| Fat | 15 | 15.6 |
| Water | 3.1 | 3.8 |
| Flavourings | 0.1 | 0.1 |
| Flour | 38 | 33.2 |
| Cocoa | - | 2.4 |

This two-layers dough is made by sheeting and the dough is stored 3 weeks in the refrigerator and 3.5 on 3.5 cm cookies are then made. After baking for 16 minutes at 180 °C, cookies 7 cm in diameter are obtained.

### Example 2

This is an example for the cookies with a filling. The basic dough is the dough of the preceding example 1 (clear dough). The filling is an apricot jam with a ratio dough/jam of 70/30. These cookies are produced by coextrusion. As before, the dough is stored in the refrigerator and cookies of the same size are produced. During the cooking the dough opens and the jam flows on the top of the cookie.

### Example 3

This is an example with a block with different shapes according to the last embodiment of the invention. The block of dough has a thickness of 3 mm and different geometrical forms. The composition is the same as for the clear dough of example 1, but the baking powder content is 0 and the fat content is 15.5 %

## Claims

1. Ready-for-use cookie dough in the form of a block which can be preserved in the refrigerator and which is prepared from flour, sugar, baking powder and fat, containing up to 1.5 % baking powder and being provided in a precut form or in a form having grooves, wherein said block presents the following features selected from the group consisting of :
a) said block has at least two different layers,
b) said block has at least two different stripes for each piece taken from the block,
c) said block has for each piece a stamping on the top,
d) said block has for each piece a decoration on the top,
e) said block has for each piece a filling different from the basic dough and
f) said block has precut forms of different specific shapes.

2. Ready-for-use cookie dough according to claim 1, wherein the block of dough has between 2 and 6 layers.

3. Ready-for-use cookie dough according to claim 1, wherein the block of dough has between 2 and 6 stripes for each piece.

4. Ready-for-use cookie dough according to claim 1, wherein the filling is a liquid or creamy filling.

## Patentansprüche

1. Gebrauchsfertiger Plätzchenteig in der Form eines Blocks, der im Kühlschrank aufbewahrt werden kann und hergestellt ist aus Mehl, Zucker, Backpulver und Fett, der bis zu 1,5% Backpulver enthält und in einer vorgeschnittenen Form oder in einer Form mit Rillen bereitgestellt wird, wobei der Block die folgenden Merkmale aufweist, die aus der Gruppe ausgewählt sind, die besteht aus:
a) der Block weist wenigstens zwei unterschiedliche Schichten auf,
b) der Block weist wenigstens zwei unterschiedliche Streifen für jedes Stück auf, das von dem Block abgetrennt wird,
c) der Block hat für jedes Stück eine Prägung auf der Oberseite,
d) der Block hat für jedes Stück eine Dekoration auf der Oberseite,
e) der Block hat für jedes Stück eine Füllung, die sich von dem Grundteig unterscheidet, und
f) der Block weist vorgeschnittene Formen unterschiedlicher spezifischer Gestalt auf.

2. Gebrauchsfertiger Plätzchenteig nach Anspruch 1, wobei der Block des Teigs zwischen 2 und 6 Schichten aufweist.

3. Gebrauchsfertiger Plätzchenteig nach Anspruch 1, wobei der Block des Teigs zwischen 2 und 6 Streifen für jedes Stück aufweist.

4. Gebrauchsfertiger Plätzchenteig nach Anspruch 1, wobei die Füllung eine flüssige oder cremige Füllung ist.

## Revendications

1. Pâte prête à l'emploi pour petits gâteaux, sous forme d'un bloc qui peut être conservé au réfrigérateur et qui est préparé à partir de farine, de sucre, de poudre levante et de matière grasse, contenant jusqu'à 1,5 % de poudre levante et qui est fourni sous une forme précoupée ou sous une forme comportant des rainures, ledit bloc présentant les caractéristiques ci-après choisies dans le groupe suivant :
a) ledit bloc comprend au moins deux couches différentes ;
b) ledit bloc comprend au moins deux bandes différentes pour chaque morceau prélevé dans le bloc ;
c) ledit bloc comporte pour chaque morceau un estampage sur la partie supérieure ;
d) ledit bloc comporte pour chaque morceau une décoration sur la partie supérieure ;
e) ledit bloc comporte pour chaque morceau un fourrage différent de la pâte de base ; et
f) ledit bloc comporte des formes précoupées ayant différentes formes géométriques.

2. Pâte prête à l'emploi pour petits gâteaux suivant la revendication 1, dans laquelle le bloc de pâte comprend deux à six couches.

3. Pâte prête à l'emploi pour petits gâteaux suivant la revendication 1, dans laquelle le bloc de pâte comprend deux à six bandes pour chaque morceau.

4. Pâte prête à l'emploi pour petits gâteaux suivant la revendication 1, dans laquelle le fourrage est un fourrage liquide ou crémeux.
